Europäisches Patentamt

European Patent Office

Office européen des brevets

(19)

(11) Veröffentlichungsnummer : **0 406 710 B1**

# (12) EUROPÄISCHE PATENTSCHRIFT

(45) Veröffentlichungstag der Patentschrift :
**20.10.93 Patentblatt 93/42**

(51) Int. Cl.$^5$ : **B01D 53/34**

(21) Anmeldenummer : **90112408.1**

(22) Anmeldetag : **29.06.90**

(54) **Verfahren zur selektiven Absorption von Chlor und/oder Brom aus CO2-haltigen Abgasen mit Hilfe von Wasserdampf.**

(30) Priorität : **01.07.89 DE 3921787**

(43) Veröffentlichungstag der Anmeldung :
**09.01.91 Patentblatt 91/02**

(45) Bekanntmachung des Hinweises auf die Patenterteilung :
**20.10.93 Patentblatt 93/42**

(84) Benannte Vertragsstaaten :
**BE CH DE FR GB IT LI NL**

(56) Entgegenhaltungen :
**EP-A- 0 022 172
DE-A- 3 931 270
US-A- 3 984 523**

(73) Patentinhaber : **HOECHST AKTIENGESELLSCHAFT
D-65926 Frankfurt (DE)**

(72) Erfinder : **Girrbach, Ulrich, Dr.
Lorelei Strasse 46
D-6000 Frankfurt am Man (DE)**
Erfinder : **Härtl, Edgar, Dr.
Fasanenweg 2
D-6070 Langen (DE)**
Erfinder : **Malow, Egon
Herderstrasse 25
D-6203 Hochheim (DE)**

## Beschreibung

**Verfahren zur selektiven Absorption von Chlor und/oder Brom aus $CO_2$-haltigen Abgasen mit Hilfe von Wasserdampf**

Bei der Verbrennung chlorierter Kohlenwasserstoffe entsteht neben Chlorwasserstoff und $CO_2$ nach dem DEACON-Gleichgewicht auch elementares Chlor. Dieses Chlor darf nicht an die Umgebung abgegeben werden und muß daher weitestgehend aus dem Abgas entfernt werden. In der Bundesrepublik Deutschland muß die Chlorkonzentration unterhalb 5 mg/m³ liegen.

Die Absorption von Chlor aus Gasströmen erfolgt bisher im allgemeinen mit Natronlauge unter Bildung von Natriumhypochlorit:

$$Cl_2 + 2NaOH \rightarrow NaCl + NaOCl + H_2O$$

Bei Gasströmen, die neben Chlor nur Inertgas enthalten, entsteht aus dem Absorptionsmittel ein technisch verwertbares Produkt (NaOCl-Lösung). Enthält das zu absorbierende Abgas jedoch neben $Cl_2$ noch andere alkalilösliche Gase, so fällt bei gleicher Vorgehensweise eine Lösung aus mehreren Salzen an, die weitgehend unverwertbar ist. Beispielsweise wird auch $CO_2$ unter Bildung von $NaHCO_3$ von Natronlauge absorbiert:

$$NaOH + CO_2 \rightarrow NaHCO_3$$

Die Beseitigung von NaOCl in solchen Salzgemischen erfolgt nach dem Stand der Technik durch Zugabe von $Na_2SO_3$.

Zur Minimierung der unerwünschten gleichzeitigen Absorption von $CO_2$ wurden bereits viele Anstrengungen unternommen, so daß für spezielle Anwendungen bereits Techniken bekannt sind.

Ein in der DE-OS 2 849 498 beschriebenes Verfahren nutzt zwei mit NaOH betriebene Absorptionskreisläufe zur Absorption von $Cl_2$ zu NaCl und NaOCl. Ein Teil des entstandenen NaOCl wird dauernd ausgeschleust und mit $NaHSO_3$ zersetzt. Das nach diesem Verfahren gereinigte Abgas enthält jedoch noch ca. 10 ppm, d.h. etwa 30 mg/m³ Chlor.

Die in der US-PS 3 984 523 beschriebene mehrstufige Gegenstromabsorption von Chlor mit Natronlauge eignet sich nur für Gasströme, die erstens hoch mit Chlor beladen sind und zweitens $CO_2$ in einer ähnlichen Konzentration wie $Cl_2$ enthalten. Für 100 - 1000-fachen Überschuß an $CO_2$ gegenüber $Cl_2$ im Abgas ist dieses Verfahren wegen der starken Absorption von $CO_2$ in Alkali jedoch nicht geeignet. Bei hohen Chlorbeladungen im Abgas wird das in der letzten Stufe absorbierte $CO_2$ in der ersten Stufe vom Chlor wieder ausgetrieben, was bei niedrigen Chlorbeladungen nicht möglich ist.

Aus dem Derwent Report 73452V/42, betreffend die Japanische Anmeldung 72/84607 (Veröff. Nr. 74/40277) ist es weiterhin bekannt, $Cl_2$ aus $CO_2$-haltigen Abgasen in einem 3-Stufen-Verfahren zu absorbieren, indem man zuerst mit Meerwasser in einem Absorptionsturm die Hauptmenge des $Cl_2$ auswäscht, dann das restliche $Cl_2$ mit $SO_2$ umsetzt und anschließend erneut mit Wasser wäscht. Dabei wird die zweite Wäsche mit einem Strahlwäscher durchgeführt.

Überraschenderweise wurde nun gefunden, daß man $Cl_2$ und/oder $Br_2$ mit Hilfe von kondensierenden Wasserdampf aus einem $CO_2$-haltigem Abgas absorbieren kann, das mindestens 1 Mol $SO_2$ pro Mol $Cl_2$ und/oder pro Mol $Br_2$ enthält. Falls das Abgas von seiner Entstehung her noch nicht eine derartige Menge $SO_2$ enthält, wird dem Abgas soviel $SO_2$ zugegeben, daß dies der Fall ist.

Ein Gegenstand der Erfindung ist daher ein Verfahren zur Absorption von $Cl_2$ und/oder $Br_2$ aus $CO_2$-haltigem Abgas, das mindestens 1 Mol $SO_2$ pro Mol $Cl_2$ und/oder pro Mol $Br_2$ enthält, dadurch gekennzeichnet, daß man die Absorption mit Hilfe von kondensierendem Wasserdampf durchführt.

Ein weiterer Gegenstand der Erfindung ist ein Verfahren zur Absorption von $Cl_2$ und/oder $Br_2$ aus $CO_2$-haltigem Abgas, das weniger als 1 Mol $SO_2$ pro Mol $Cl_2$ und/oder pro Mol $Br_2$ enthält, dadurch gekennzeichnet, daß man dem Abgas soviel $SO_2$ zugibt, daß mindestens 1 Mol $SO_2$ pro Mol $Cl_2$ und/oder pro Mol $Br_2$ vorliegt und dann die Absorption mit Hilfe von kondensierendem Wasserdampf durchführt.

1 Mol $SO_2$ pro Mol $Cl_2$ und/oder pro Mol $Br_2$ bedeutet dabei 1 Mol $SO_2$ pro Mol Halogen, welches $Cl_2$ und/oder $Br_2$ sein kann.

Zur Absorption des $Cl_2$ und/oder $Br_2$ wird das Abgas, gegebenenfalls nach Zugabe von $SO_2$, mit Wasserdampf gemischt und dann die Mischung soweit abgekühlt, daß der Wasserdampf kondensiert. Der Absorptionsgrad läßt sich über die Wasserdampfmenge und die Intensität der Kühlung einstellen.

Eine geeignete Vorrichtung für die Absorption ist beispielsweise ein senkrecht stehendes Rohr mit innenliegender Kühlschlange. Am Kopf des Rohres wird das Abgas, gegebenenfalls nach Zugabe von $SO_2$, und (vorzugsweise leicht überhitzter) Wasserdampf eingeleitet. Die Kühlschlange wird von Kühlwasser durchströmt, wobei sich eine lange Nebelstrecke ausbildet, in der die Absorption stattfindet. Die kondensierten Wassertröpfchen bilden Tropfen, die am Fußende des Rohres gesammelt und abgezogen werden. Anschließend wird weiteres Wasser aus dem Abgas-Wasserdampf-Gemisch auskondensiert, indem das Gemisch auf etwa 20°C abgekühlt wird. Dies kann mit Hilfe eines zweiten Kühlers oder einer konventionellen Absorptionskolonne erfolgen, die mit dem aufgefangenen Kondensat des vorgeschalteten Kühlers betrieben wird. Das Abgas ist anschließend weitestgehend frei von $Cl_2$ bzw. $Br_2$, während das $CO_2$ nicht absorbiert wird.

Das erfindungsgemäße Verfahren eignet sich insbesondere für $CO_2$-reiche Abgase, sogar für solche, deren $CO_2$-Gehalt $10^4$ bis $10^6$ mal so hoch ist wie

der $Cl_2$-Gehalt, bzw. der $Br_2$-Gehalt.

Das folgende Beispiel soll die Erfindung erläutern.

**Beispiel 1**

Es wurde ein Abgas gereinigt, das 24,8 Gew.-% $CO_2$, 75 Gew.-% $N_2$, 0,1 Gew.-% $Cl_2$ (= 1000 ppm) und 0,1 Gew.-% $SO_2$ (= 1000 ppm) enthielt. Das Abgas durchströmte zwei hintereinandergeschaltete Kühler (Rohre mit innenliegender Kühlschlange) jeweils von oben nach unten.

Die Kühlschlange des ersten Kühlers wurde von thermostatisiertem Wasser mit einer Temperatur von 70°C durchströmt. Die Kühlschlange des zweiten Kühlers wurde von thermostatisiertem Wasser mit einer Temperatur von 15°C durchströmt. Der durchgesetzte Volumenstrom betrug 1,8 m³/h. Zu diesem Abgas wurden ca. 1 100 g/h Wasserdampf mit einer Temperatur von 100°C am Kopf des ersten Kühlers zugegeben. Die am Fuß des zweiten Kühlers gemessene Konzentration an $Cl_2$ lag bei etwa 1 ppm $Cl_2$ im gereinigten Abgas, die $SO_2$-Konzentration war weniger als 1 ppm.

Der Absorptionsgrad betrug für $Cl_2$ ca. 99,9 %, für $SO_2$ war der Absorptionsgrad sogar noch besser.

**Patentansprüche**

1. Verfahren zur Absorption von $Cl_2$ und/oder $Br_2$ aus $CO_2$-haltigem Abgas, das mindestens 1 Mol $SO_2$ pro Mol $Cl_2$ und/oder pro Mol $Br_2$ enthält, dadurch gekennzeichnet, daß man die Absorption mit Hilfe von kondensierendem Wasserdampf durchführt.

2. Verfahren zur Absorption von $Cl_2$ und/oder $Br_2$ aus $CO_2$-haltigem Abgas, das weniger als 1 Mol $SO_2$ pro Mol $Cl_2$ und/oder pro Mol $Br_2$ enthält, dadurch gekennzeichnet, daß man dem Abgas soviel $SO_2$ zugibt, daß mindestens 1 Mol $SO_2$ pro Mol $Cl_2$ und/oder pro Mol $Br_2$ vorliegt und dann die Absorption mit Hilfe von kondensierendem Wasserdampf durchführt.

**Claims**

1. A process for the absorption of $Cl_2$ and/or $Br_2$ from $CO_2$-containing off-gas which contains at least 1 mol of $SO_2$ per mol of $Cl_2$ and/or per mol of $Br_2$, which comprises carrying out the absorption with the aid of condensing steam.

2. A process for the absorption of $Cl_2$ and/or $Br_2$ from $CO_2$-containing off-gas which contains less than 1 mol of $SO_2$ per mol of $Cl_2$ and/or per mol of $Br_2$, wherein sufficient $SO_2$ is added to the off-gas to give at least 1 mol of $SO_2$ per mol of $Cl_2$ and/or per mol of $Br_2$ and then the absorption is carried out with the aid of condensing steam.

**Revendications**

1. Procédé pour l'absorption de $Cl_2$ et/ou de $Br_2$ à enlever d'un gaz d'échappement contenant du $CO_2$, qui contient au moins une mole de $SO_2$ par mole de $Cl_2$ et/ou par mole de $Br_2$, procédé caractérisé en ce qu'on conduit l'absorption à l'aide de vapeur d'eau soumise à condensation.

2. Procédé pour l'absorption de $Cl_2$ et/ou de $Br_2$ pour le séparer ou les séparer d'un gaz d'échappement contenant du $CO_2$, qui contient moins d'une mole de $SO_2$ par mole de $Cl_2$ et/ou par mole de $Br_2$, procédé caractérisé en ce qu'on ajoute au gaz d'échappement une quantité de $SO_2$ telle qu'il y ait au moins une mole de $SO_2$ par mole de $Cl_2$ et/ou par mole de $Br_2$ et l'on conduit ensuite l'absorption à l'aide de vapeur d'eau soumise à condensation.